# EUROPEAN PATENT APPLICATION

(11) **EP 3 985 852 A1**
(43) Date of publication of application: **20.04.2022**
(21) Application number: 21183917.0
(22) Date of filing: 06.07.2021
(51) Int. Cl.: H02M 1/32, H02M 3/158, H02M 1/00

(54) **STEP-UP CONVERSION MODULE WITH PROTECTION CIRCUIT**

(30) Priority: 13.10.2020 CN 202011090585
(71) Applicant: Delta Electronics Inc., Taoyuan City 320023 (TW)
(72) Inventor: HUANG, Wen-Yu, 320023 Taoyuan City (TW); LIN, Xin-Hung, 320023 Taoyuan City (TW)
(74) Representative: 2K Patentanwälte Blasberg Kewitz & Reichel

(57) **Abstract**

A step-up conversion module (10,10') includes a first step-up circuit (12,12'), a second step-up circuit (14,14'), a first unidirectional conduction element (182), and a second unidirectional conduction element (184). The first step-up circuit (12,12') includes a first input loop (Li1) composed of a first inductor (L1) and a first switch unit (122,122'). The second step-up circuit (14,14') includes a second input loop (Li2) composed of a second inductor (L2) and a second switch unit (142,142'). The first inductor (L1) and the second inductor (L2) form a coupling inductor (Lc) with a common core. The first unidirectional conduction element (182) blocks a first reverse current (If1) induced by the coupling inductor (Lc) to the first input loop (Li1). The second unidirectional conduction element (184) blocks a second reverse current (If2) induced by the coupling inductor (Lc) to the second input loop (Li2).

## Description

### BACKGROUND

### Technical Field

The present disclosure relates to a step-up conversion module with a protection circuit, and more particularly to a step-up conversion module with a protection circuit having a common-core structure.

### Description of Related Art

The statements in this section merely provide background information related to the present disclosure and do not necessarily constitute prior art.

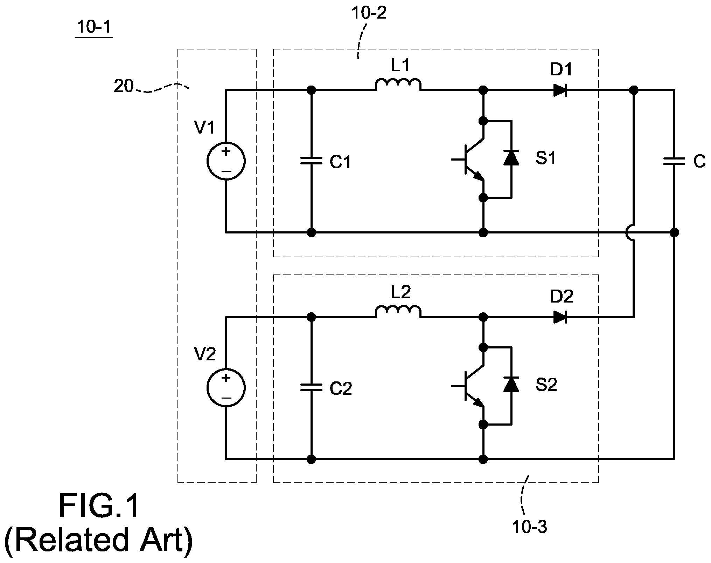

Please refer to FIG. 1, which shows a circuit diagram of a conventional step-up conversion module applied to a solar cell module. In this structure, there are two independent step-up circuits 10-2,10-3. The two step-up circuits 10-2,10-3 convert a first power V1 and a second power V2 into an output power Vo, respectively. Since the solar cell module 20 includes multiple sets of solar cells, each set of solar cells must use a step-up circuit to convert its electrical energy into the output power Vo. Therefore, when the solar cell module 20 is installed in a large area, the step-up conversion module 10-1 must include multiple sets of step-up circuits, which cause the circuit area of the step-up conversion module 10-1 to be too large and to be conducive to the installation of the step-up conversion module 10-1. The bulky component in the step-up circuit is usually the internal inductor L with an iron core and coils, and the size of the iron core is the main cause of the excessive volume of the internal inductor L, and therefore the size of the step-up conversion module 10-1 is difficult to be reduced.

Further, since the step-up conversion module 10-1 is composed of multiple sets of step-up circuits in parallel, when the solar cell module 20 has a problem, for example but not limited to reversely connected or no output due to damage, it often not only affects the corresponding coupled step-up circuit but also affects step-up circuits of other step-up conversion modules through the parallel structure to cause problems of the operations of the step-up circuits, thereby reducing the efficiency of the step-up conversion module 10-1.

Accordingly, how to design a step-up conversion module with a protection circuit to use a common-core circuit component to reduce the volume of the step-up conversion module and to provide the protection circuit to avoid that the step-up circuits in the step-up conversion module do not affect to each other when the solar cell module is in trouble is a major subject for the inventors of the present disclosure.

### SUMMARY

In order to solve the above-mentioned problems, the present disclosure provides a step-up conversion module with a protection circuit. The step-up conversion module includes a first step-up circuit, a second step-up circuit, a first unidirectional conduction element, and a second unidirectional conduction element. The first step-up circuit is coupled to a first power, and has a first input loop composed of a first inductor and a first switch unit. The second step-up circuit is coupled to a second power, and has a second input loop composed of a second inductor and a second switch unit. The first inductor and the second inductor form a coupling inductor with a common core. The first unidirectional conduction element is coupled to the first input loop, and blocks a first reverse current induced by the coupling inductor to the first input loop. The second unidirectional conduction element is coupled to the second input loop, and blocks a second reverse current induced by the coupling inductor to the second input loop.

The main purpose and effect of the present disclosure is to use the coupling inductor with a common-core structure to reduce the volume of the step-up conversion module, and use the protection circuit to avoid that when the voltage of one of the solar cells is very low, it corresponding step-up circuit does not generate reverse current, thereby increasing the operation efficiency of the step-up conversion module.

It is to be understood that both the foregoing general description and the following detailed description are exemplary, and are intended to provide further explanation of the present disclosure as claimed. Other advantages and features of the present disclosure will be apparent from the following description, drawings, and claims.

### BRIEF DESCRIPTION OF DRAWINGS

The present disclosure can be more fully understood by reading the following detailed description of the embodiment, with reference made to the accompanying drawings as follows:
FIG. 1 is a circuit diagram of a conventional step-up conversion module applied to a solar cell module.
FIG. 2 is a block circuit diagram of a step-up conversion module with a protection circuit according to a first embodiment of the present disclosure.
FIG. 3 is a block circuit diagram of the step-up conversion module with the protection circuit according to a second embodiment of the present disclosure.
FIG. 4 is a block circuit diagram of the step-up conversion module with the protection circuit according to a third embodiment of the present disclosure.
FIG. 5 is a block circuit diagram of the step-up conversion module with the protection circuit according to a fourth embodiment of the present disclosure.
FIG. 6 is a block circuit diagram of the step-up conversion module with the protection circuit according to a fifth embodiment of the present disclosure.

### DETAILED DESCRIPTION

Reference will now be made to the drawing figures to describe the present disclosure in detail. It will be understood that the drawing figures and exemplified embodiments of present disclosure are not limited to the details thereof.

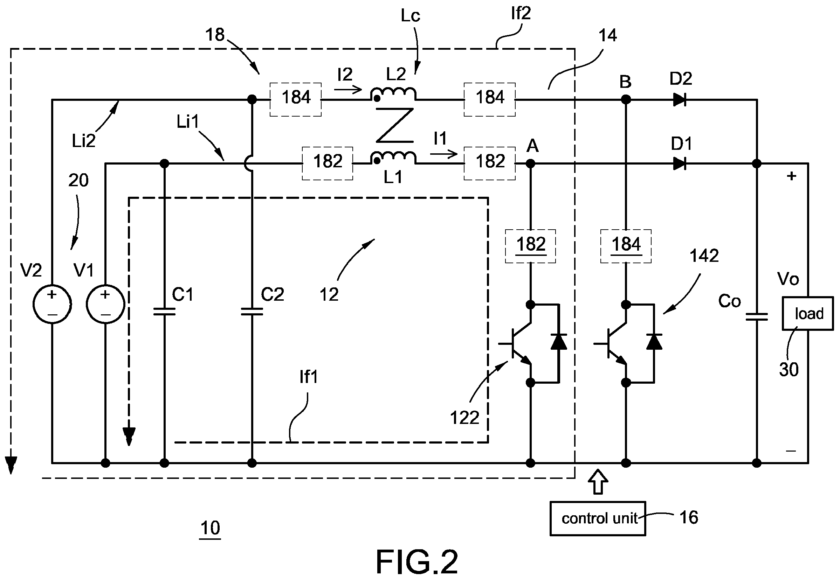

Please refer to FIG. 2, which shows a block circuit diagram of a step-up conversion module with a protection circuit according to a first embodiment of the present disclosure. A step-up conversion module 10 is coupled between a solar cell module 20 and a load 30, and the step-up conversion module 10 converts the energy generated from the solar cell module 20 into an output power Vo for supplying power to the load 30. The step-up conversion module 10 includes a first step-up circuit 12, a second step-up circuit 14, a control unit 16, an output capacitor Co, and a protection circuit 18. Each of the first step-up circuit 12 and the second step-up circuit 14 forms a step-up converter respectively. The first step-up circuit 12 includes a first inductor L1, a first power diode D1, and a first switch unit 122, and the second step-up circuit 14 includes a second inductor L2, a second power diode D2, and a second switch unit 142. A first end of the first inductor L1 is coupled to one of solar cells in the solar cell module 20 to receive a first power VI, and a second end of the first inductor L1 is coupled to a first end of the first power diode D1 through a first node A. A first end of the first switch unit 122 is coupled to the first node A, and a second end of the first switch unit 122 is coupled to a negative end. A first end of the second inductor L2 is coupled to a second power V2, and a second end of the second inductor L2 is coupled to a first end of the second power diode D2 through a second node B. A first end of the second switch unit 142 is coupled to the second node B, and a second end of the second switch unit 142 is coupled to the negative end. The control unit 16 is coupled to the first switch unit 122, and controls the first step-up circuit 12 to convert the first power V1 into the output power Vo by switching the first switch unit 122. Also, the operation of the second step-up circuit 14 is similar. The output capacitor Co is coupled to a second end of the first power diode D1 and a second end of the second power diode D2, and stabilizes the output power Vo.

In order to integrate the first inductor L1 and the second inductor L2 into one to reduce the volume of the step-up conversion module 10 and decrease the circuit cost, the first inductor L1 and the second inductor L2 form a common-core coupling inductor Lc. As shown in FIG. 2, two homonymous ends of the coupling inductor Lc are coupled to a positive end of the first power V1 and a positive end of the second power V2, respectively. Two sets or multiple sets of step-up circuits commonly use an inductor by the manner of coupling inductor Lc. The control unit 16 synchronously switches the first switch unit 122 and the second switch unit 142, that is, the first switch unit 122 and the second switch unit 142 are controlled to be turned on and turned off at the same time through a control signal with approximately the same duty cycle. The approximately the same duty cycle means an error of the duty cycle is within an error range, such as 10%, and therefore the error range allows that the control signals of controlling the first switch unit 122 and the second switch unit 142 have a slight phase shift or duty cycles of the two control signals are slightly different. Therefore, a voltage difference between the first power V1 and the second power V2 is within a first predetermined range so that a first current 11 flowing through the first inductor L1 is substantially equal to a second current 12 flowing through the second inductor L2. Once the voltage difference between the first power V1 and the second power V2 is excessive, however, the inductance of the step-up circuit having the smaller input voltage induces a reverse current in the other direction due to the coupling effect. The reverse current will cause circulating current loss to reduce the efficiency of the step-up conversion module 10.

Specifically, the first step-up circuit 12 includes a first input loop Li1 composed of the first power VI, the first inductor L1, and the first switch unit 122. When the voltage of the first power V1 is much smaller than the voltage of the second power V2 to cause the second current 12 flowing through the second inductor L2, the first inductor L1 induces a first reverse current If1 (i.e., the reverse current is induced by the dotted end) due to the coupling effect. Since the step-up conversion module 10 does not have the protection circuit 18, there is no unidirectional conduction element on the first input loop Li1 to prevent the first reverse current If1. At this condition, the first reverse current If1 flows through the first inductor L1, the first power V1 (or a first input capacitor CI), the first switch unit 122 to reduce the efficiency of the step-up conversion module 10. In addition, a second reverse current If2 generated by a second input loop Li2 of the second step-up circuit 14 is similar, which will not be repeated here.

For example, under the absence of the protection circuit 18, it is assumed that the first power V1 is 200 volts and the second power V2 is close to 0 volt, that is, the second step-up circuit 14 may not be coupled to the solar cell or the corresponding solar cell may be shaded. At this condition, since the voltage of the second power V2 is much smaller than the voltage of the first power VI, the second inductor L2 generates an induced voltage due to the coupling effect of the coupling inductor Lc, thereby generating the second reverse current If2. In order to avoid this situation, the protection circuit 18 includes a first unidirectional conduction element 182 and a second unidirectional conduction element 184. The first unidirectional conduction element 182 is coupled to the first input loop Li1 to block a first reverse current If1 induced by the coupling inductor Lc to the first inductor L1. The second unidirectional conduction element 184 is coupled to the second input loop Li2 to block a second reverse current If2 induced by the coupling inductor Lc to the second inductor L2.

The first unidirectional conduction element 182 can be arranged in at least three positions in the first input loop Li1. The first position is that the first unidirectional conduction element 182 is coupled between the first inductor L1 and the first node A. The second position is that the first unidirectional conduction element 182 is coupled between the first node A and the first switch unit 122. The above-mentioned two coupling positions can be reversely biased to block the first reverse current If1 coupled to the first inductor L1 from the coupling inductor Lc. The third position is that the first unidirectional conduction element 182 is coupled between the first power V1 and the first inductor L1. However, it is not limited to only the above-mentioned three positions, as long as it is positioned in the first input loop Li1 to block the first reverse current If1. The specific coupling positions of the second unidirectional conduction element 184 is also similar, and will not be repeated here.

The best coupling position of the first unidirectional conduction element 182 is the second position above. Since the first current I1 alternately operates between the first switch unit 122 and the output capacitor Co, the average current is smaller and this loss is also lower compared with the other two positions when the first unidirectional conduction element 182 is coupled between the first node A and the first switch unit 122. The coupling position of the second unidirectional conduction element 184 is similar, which will not be repeated here. In particular, the first unidirectional conduction element 182 and the second unidirectional conduction element 184 may be diodes, thyristors, or silicon-controlled rectifiers, or formed by unidirectional conduction circuits, such as but not limited to logic switch circuits. Since the diode does not need to be controlled and the circuit is simple, it is best to use diodes for the first unidirectional conduction element 182 and the second unidirectional conduction element 184.

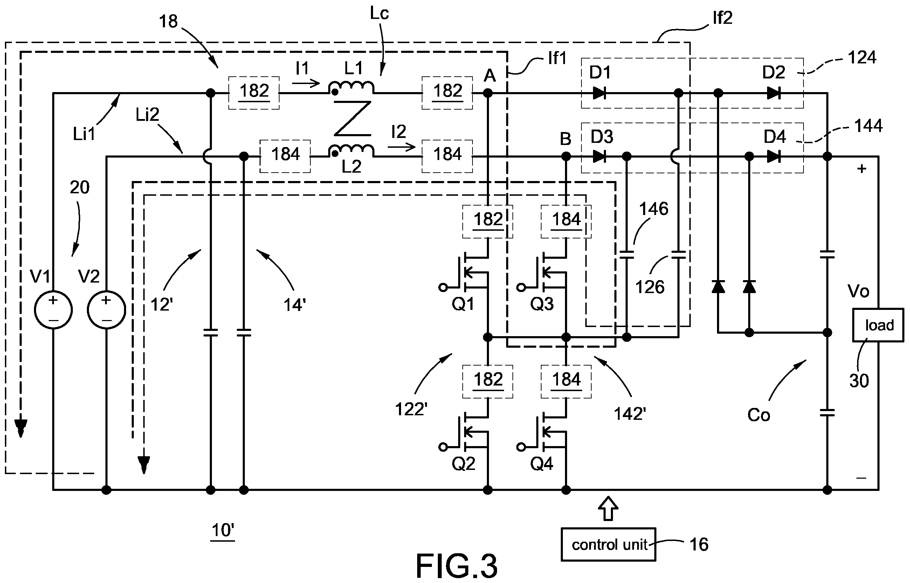

Please refer to FIG. 3, which shows a block circuit diagram of the step-up conversion module with the protection circuit according to a second embodiment of the present disclosure, and also refer to FIG. 2. The major difference between the step-up conversion module 10' shown in FIG. 3 and the step-up conversion module 10 shown in FIG. 2 is that the first step-up circuit 12' and the second step-up circuit 14' of the former are flying-capacitor step-up converters. The first step-up circuit 12' includes a first inductor L1, a first switch unit 122', a first diode assembly 124, and a first flying capacitor 126, and the second step-up circuit 14' incudes a second inductor L2, a second switch unit 142', a second diode assembly 144, and a second flying capacitor 146. A first end of the first inductor L1 is coupled to the first power VI, and a second end of the first inductor L1 is coupled to a first end of the first diode assembly 124 through a first node A. A first end of the first switch unit 122' is coupled to the first node A, and a second end of the first switch unit 122' is coupled to a negative end. The first diode assembly 124 includes a first power diode D1 and a second power diode D2 connected in series, and the first power diode D1 is coupled to the first node A. The first switch unit 122' includes a first power switch Q1 and a second power switch Q2 connected in series, and the first power switch Q1 is coupled to the first node A and the second power switch Q2 is coupled to the negative end. A first end of the first flying capacitor 126 is coupled to the first power switch Q1 and the second power switch Q2, and a second end of the first flying capacitor 126 is coupled to the first power diode D1 and the second power diode D2.

A first end of the second inductor L2 is coupled to the second power V2, and a second end of the second inductor L2 is coupled to a first end of the second diode assembly 144 through a second node B. A first end of the second switch unit 142' is coupled to the second node B, and a second end of the second switch unit 142' is coupled to the negative end. The second diode assembly 144 includes a third power diode D3 and a fourth power diode D4 connected in series, and the third power diode D3 is coupled to the second node B. The second switch unit 142' includes a third power switch Q3 and a fourth power switch Q4 connected in series, and the third power switch Q3 is coupled to the second node B and the fourth power switch Q4 is coupled to the negative end. A first end of the second flying capacitor 146 is coupled to the third power switch Q3 and the fourth power switch Q4, and a second end of the second flying capacitor 146 is coupled to the third power diode D3 and the fourth power diode D4.

The control unit 16 is coupled to the first power switch Q1 and the second power switch Q2, and controls the first step-up circuit 12' to convert the first power V1 into the output power Vo by switching the first power switch Q1 and the second power switch Q2. Also, the operation of the second step-up circuit 14' is similar. The output capacitor Co is coupled to a second end of the second power diode D2 and a second end of the fourth power diode D4, and stabilizes the output power Vo. The manner of controlling the coupling inductor Lc with a common-core structure composed of the first inductor L1 and the second inductor L2 is similar to the FIG. 2. The control unit 16 substantially synchronously switches the first switch unit 122' and the second switch unit 142', that is, the first power switch Q1 and the third power switch Q3 are substantially synchronous, and the second power switch Q2 and the fourth power switch Q4 are substantially synchronous.

The first step-up circuit 12 includes a first input loop Li1 composed of a first power VI, a first inductor L1, and a first switch unit 122'. When the voltage of the first power V1 is much smaller than the voltage of the second power V2 to cause the second current 12 flowing through the second inductor L2, the first inductor L1 induces a first reverse current If1. In addition, a second reverse current If2 generated by the second input loop Li2 of the second step-up circuit 14' is similar, which will not be repeated here. Therefore, the protection circuit 18 blocks the first reverse current If1 through the first unidirectional conduction element 182 coupled to the first input loop Li1 and blocks the second reverse current If2 through the second unidirectional conduction element 184 coupled to the second input loop Li2.

It is similar to FIG. 2, the first unidirectional conduction element 182 can be arranged in at least three positions in the first input loop Li1. The first position is that the first unidirectional conduction element 182 is coupled between the first inductor L1 and the first node A. The second position is that the first unidirectional conduction element 182 is coupled between the first node A and the first switch unit 122' (i.e., the first power switch Q1 of the first switch unit 122'). The third position is that the first unidirectional conduction element 182 is coupled between the first power V1 and the first inductor L1. The three coupling positions can be reversely biased to block the first reverse current If1 coupled to the first inductor L1 from the coupling inductor Lc. The specific coupling positions of the second unidirectional conduction element 184 is also similar, and will not be repeated here. Although the step-up conversion module 10 shown in FIG. 2 and FIG. 3 has only two step-up circuits, it is not limited to this. In other words, the step-up conversion module 10 may have more than two step-up circuits, and the coupling inductor Lc is composed of common-core inductors of the step-up circuits.

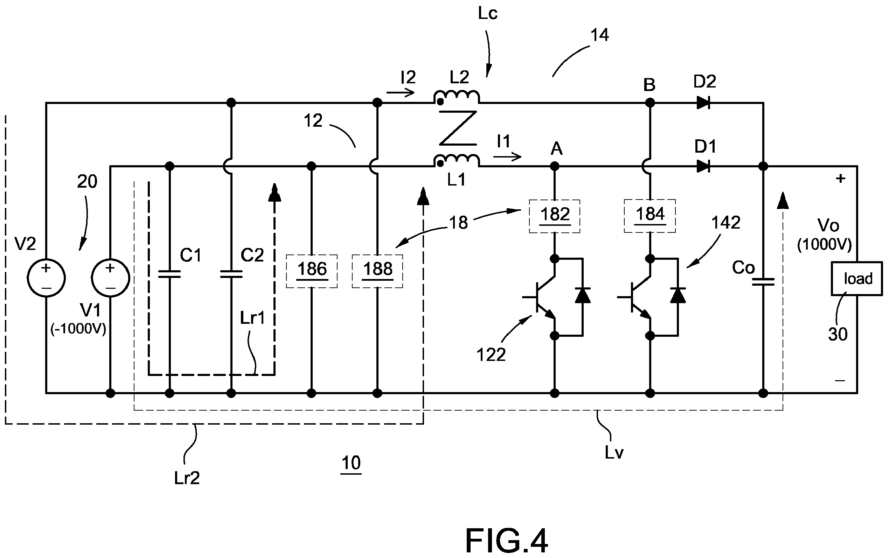

Please refer to FIG. 4, which shows a block circuit diagram of the step-up conversion module with the protection circuit according to a third embodiment of the present disclosure, and also refer to FIG. 2 and FIG. 3. Take the step-up conversion module 10 shown in FIG. 2 as an example, the protection circuit 18 further includes a third unidirectional conduction element 186 and a fourth unidirectional conduction element 188. The third unidirectional conduction element 186 is connected to an input end of the first step-up circuit 12, i.e., connected to the first power V1 in parallel to provide a first reverse clamping path Lr1. The fourth unidirectional conduction element 188 is connected to an input end of the second step-up circuit 14, i.e., connected to the second power V2 in parallel to provide a second reverse clamping path Lr2.

When the protection circuit 18 has no the third unidirectional conduction element 186 and the fourth unidirectional conduction element 188, and one of the first step-up circuit 12 and the second step-up circuit 14 is reversely connected to the input power, the output power Vo is provided on the output capacitor Co since the step-up circuit correctly connected to the input power normally operates. At this condition, the power diode of the step-up circuit reversely connected to the input power withstands a voltage of the input power plus the output power Vo, i.e., a voltage superimposed path Lv. If the power diode does not specifically select a high withstand voltage for this situation, the power diode will be damaged due to the overvoltage. In particular, the third unidirectional conduction element 186 and the fourth unidirectional conduction element 188 may be diodes, thyristors, or silicon-controlled rectifiers, or formed by unidirectional conduction circuits, such as but not limited to logic switch circuits. Since the diode does not need to be controlled and the circuit is simple, it is best to use diodes for the third unidirectional conduction element 186 and the fourth unidirectional conduction element 188.

Take the FIG. 4 as an example, it is assumed that the first power V1 is 1000 volts and reversely connected, the second step-up circuit 14 outputs the second power V2 with 1000 volts to the output capacitor Co so that the voltage across the output capacitor Co is 1000 volts. At this condition, the voltage on voltage superimposed path Lv is up to 2000 volts, and therefore the first power diode D1 must withstand 2000-volt voltage. The same situation also occurs to the first power diode D1 shown in FIG. 3. However, the first power diode D1 withstands half the voltage of the output capacitor Co and the reversely-connected input power, but it will still be damaged. In order to avoid this situation, the third unidirectional conduction element 186 of the protection circuit 18 provides a first reverse clamping path Lr1. Once the first power V1 is reversely connected, the reversed first power V1 can be clamped to a low voltage through the first reverse clamping path Lr1 without superimposing its voltage on the first power diode D1. Therefore, the step-up conversion module 10 can continuously operate under the undamaged first power diode D1, and the first unidirectional conduction element 182 is used to block the first reverse current If1. The unidirectional conduction element 188 also provides this function, which will not be repeated here. In addition, the step-up conversion module 10' shown in FIG. 3 also applies the third unidirectional conduction element 186 and the fourth unidirectional conduction element 188 to protect the first power diode D1 and the third power diode D3, which will not be repeated here.

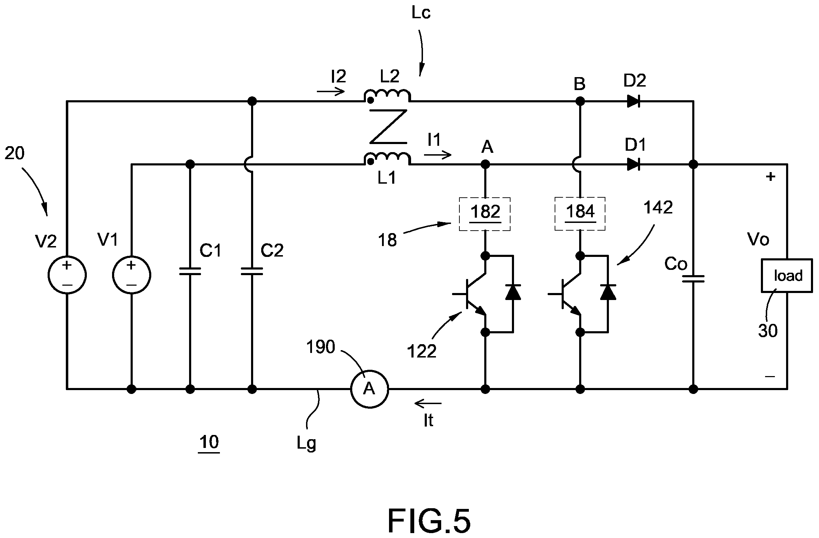

Please refer to FIG. 5, which shows a block circuit diagram of the step-up conversion module with the protection circuit according to a fourth embodiment of the present disclosure, and also refer to FIG. 2 to FIG. 4. Take the step-up conversion module 10 shown in FIG. 2 as an example, the protection circuit 18 further includes a current measuring unit 190, and the current measuring unit 190 is coupled to a common-negative path Lg of the first input loop Li1 and the second input loop Li2 to sense a total current It flowing through the first step-up circuit 12 and the second step-up circuit 14. In the prior art, when two step-up converters measure currents, each of the two step-up converter measure currents needs to use a current measuring unit to respectively measure the currents. Even if the two step-up converters are controlled in a current-shared condition, they still need to use a current measuring unit to measure their respective currents. In the present disclosure, the first step-up circuit 12 and the second step-up circuit 14 are integrated into a single step-up conversion module 10. The second end of the first switch unit 122 and the second end of the second switch unit 142 are commonly coupled so that first input loop Li1 and the second input loop Li2 form a common-negative path Lg so that the total current It of the first step-up circuit 12 and the second step-up circuit 14 can be measured by using only one current measuring unit 190. When a voltage difference between the first power V1 and the second power V2 is within a first predetermined range, the control unit 16 controls a first current I1 flowing through the first inductor L1 is substantially equal to a second current 12 flowing through the second inductor L2, and therefore the total current It measured by the current measuring unit 190 is substantially equal to an average current of the first current I1 and the second current 12.

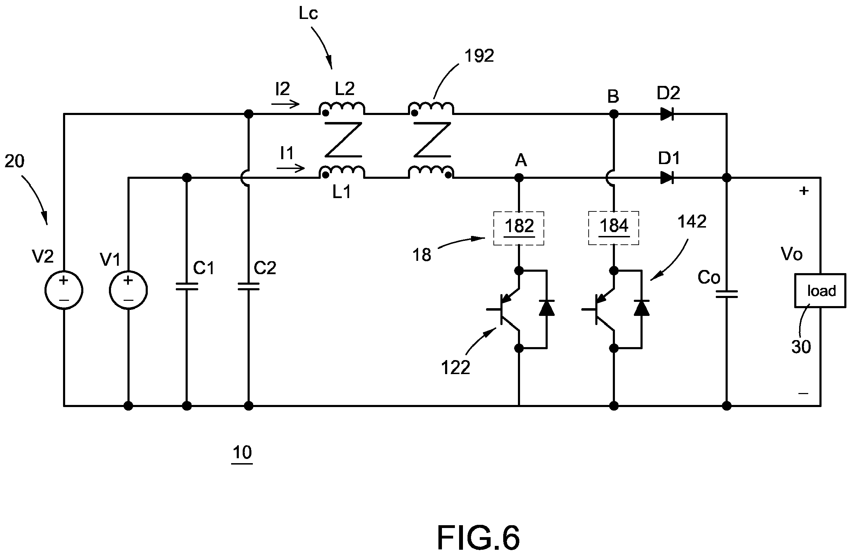

Please refer to FIG. 6, which shows a block circuit diagram of the step-up conversion module with the protection circuit according to a fifth embodiment of the present disclosure, and also refer to FIG. 2 to FIG. 5. Take the step-up conversion module 10 shown in FIG. 2 as an example, the step-up conversion module 10 further includes a current transforming unit 192. The current transforming unit 192 is coupled to the coupling inductor Lc. Specifically, the current transforming unit 192 may be coupled between the coupling inductor Lc and the first power V1 and the second power V2. Alternatively, the current transforming unit 192 may be coupled between the coupling inductor Lc and the first node A and the second node B. Although the current transforming unit 192 is similar to the coupling inductor Lc, which is wound by coils, the connection relationship between the dotted end and the first power V1 and the second power V2 is different from that of the coupling inductor Lc, and the number of coils is also small. As shown in FIG. 6, two heteronymous ends of the current transforming unit 192 are coupled to two homonymous ends of the coupling inductor Lc. When a voltage difference between the first power V1 and the second power V2 is within a second predetermined range, the current transforming unit 192 maintains the first current I1 flowing through the first inductor L1 to be equal to the second current 12 flowing through the second inductor L2.

The reason is that two dotted ends of the two windings of the current transforming unit 192 are opposite. Therefore, when the first current I1 is larger, the current transforming unit 192 induces to the second step-up circuit 14 through the coupling effect to reduce the current difference between the first current I1 and the second current 12 so as to maintain the first current I1 to be equal to the second current 12, and vice versa. Therefore, the second predetermined range is greater than the first predetermined range, that is, when the voltage difference between the first power V1 and the second power V2 is greater, the step-up conversion module 10 using the current transforming unit 192 can still maintain the first current I1 to be equal to the second current 12.

## Claims

1. A step-up conversion module with a protection circuit (18), **characterized in that** the step-up conversion module (10,10') comprising:
a first step-up circuit (12,12') coupled to a first power (V1), and having a first input loop (Li1) composed of a first inductor (LI) and a first switch unit (122,122'),
a second step-up circuit (14,14') coupled to a second power (V2), and having a second input loop (Li2) composed of a second inductor (L2) and a second switch unit (142,142'), wherein the first inductor (LI) and the second inductor (L2) form a coupling inductor (Lc) with a common core,
a first unidirectional conduction element (182) coupled to the first input loop (Li1), and configured to block a first reverse current (If1) induced by the coupling inductor (Lc) to the first input loop (Li1), and
a second unidirectional conduction element (184) coupled to the second input loop (Li2), and configured to block a second reverse current (If2) induced by the coupling inductor (Lc) to the second input loop (Li2).

2. The step-up conversion module (10,10') as claimed in claim 1, further comprising:
a third unidirectional conduction element (186) connected to an input end of the first step-up circuit (12,12'), and configured to provide a first reverse clamping path (Lr1) when the first power (VI) is reversely connected, and
a fourth unidirectional conduction element (188) connected to an input end of the second step-up circuit (14,14'), and configured to provide a second reverse clamping path (Lr2) when the second power (V2) is reversely connected.

3. The step-up conversion module (10,10') as claimed in claim 2, wherein the first unidirectional conduction element (182), the second unidirectional conduction element (184), the third unidirectional conduction element (186), and the fourth unidirectional conduction element (188) are diodes.

4. The step-up conversion module (10,10') as claimed in claim 1, wherein a first end of the first switch unit (122,122') is coupled to the first inductor (LI), a first end of the second switch unit (142,142') is coupled to the second inductor (L2), and a second end of the first switch unit (122,122') and a second end of the second switch unit (142,142') are commonly connected so that the first input loop (Li1) and the second input loop (Li2) form a common-negative path (Lg).

5. The step-up conversion module (10,10') as claimed in claim 4, further comprising:
a current measuring unit (190) coupled to the common-negative path (Lg), and configured to sense a total current (It) flowing through the first step-up circuit (12,12') and the second step-up circuit (14,14').

6. The step-up conversion module (10,10') as claimed in claim 1, wherein two homonymous ends of the coupling inductor (Lc) are coupled to a positive end of the first power (VI) and a positive end of the second power (V2), respectively.

7. The step-up conversion module (10,10') as claimed in claim 6, further comprising:
a current transforming unit (192) coupled to the coupling inductor (Lc),
wherein two heteronymous ends of the current transforming unit (192) are coupled to the two homonymous ends of the coupling inductor (Lc).

8. The step-up conversion module (10,10') as claimed in claim 1, wherein each of the first step-up circuit (12,12') and the second step-up circuit (14,14') forms a step-up converter respectively; a first node (A) coupled to a first power diode (D1) is provided between the first inductor (LI) and the first switch unit (122,122'), and a second node (B) coupled to a second power diode (D2) is provided between the second inductor (L2) and the second switch unit (142,142').

9. The step-up conversion module (10,10') as claimed in claim 8, wherein the first unidirectional conduction element (182) is coupled between the first inductor (LI) and the first node (A), or the first unidirectional conduction element (182) is coupled between the first node (A) and the first switch unit (122,122'), or the first unidirectional conduction element (182) is coupled between the first power (VI) and the first inductor (LI).

10. The step-up conversion module (10,10') as claimed in claim 8, wherein the second unidirectional conduction element (184) is coupled between the second inductor (L2) and the second node (B), or the second unidirectional conduction element (184) is coupled between the second node (B) and the second switch unit (142,142'), or the second unidirectional conduction element (184) is coupled between the second power (V2) and the second inductor (L2).

11. The step-up conversion module (10,10') as claimed in claim 1, wherein each of the first step-up circuit (12,12') and the second step-up circuit (14,14') forms a flying-capacitor step-up converter respectively; a first node (A) coupled to a first power diode assembly is provided between the first inductor (LI) and the first switch unit (122,122'), and a second node (B) coupled to a second power diode assembly is provided between the second inductor (L2) and the second switch unit (142,142').

12. The step-up conversion module (10,10') as claimed in claim 11, wherein the first unidirectional conduction element (182) is coupled between the first inductor (LI) and the first node (A), or the first unidirectional conduction element (182) is coupled between the first node (A) and the first switch unit (122,122'), or the first unidirectional conduction element (182) is coupled between the first power (VI) and the first inductor (LI).

13. The step-up conversion module (10,10') as claimed in claim 11, wherein the second unidirectional conduction element (184) is coupled between the second inductor (L2) and the second node (B), or the second unidirectional conduction element (184) is coupled between the second node (B) and the second switch unit (142,142'), or the second unidirectional conduction element (184) is coupled between the second power (V2) and the second inductor (L2).

14. The step-up conversion module (10,10') as claimed in claim 1, wherein the first switch unit (122,122') and the second switch unit (142,142') are controlled to synchronously switch within an error range.
